# EUROPEAN PATENT APPLICATION

(11) **EP 4 847 891 A2**
(43) Date of publication of application: **02.12.2026**
(21) Application number: 26171206.1
(22) Date of filing: 08.04.2026
(51) Int. Cl.: G01J 1/42, G01J 1/44, G01J 1/46

(54) **LOW-NOISE AMBIENT LIGHT CANCELLATION SYSTEM**

(30) Priority: 11.04.2025 US 202519177024
(71) Applicant: Avago Technologies International Sales Pte. Limited, Singapore 768923 (SG)
(72) Inventor: Agarwal, Rishi Chandra, Irvine, CA, 92618 (US); Chen, Jianlong, Irvine, CA, 92620 (US); Arefi, Peyman, Mission Viejo, CA, 92692 (US)
(74) Representative: Grünecker Patent- und Rechtsanwälte PartG mbB

(57) **Abstract**

An apparatus including a digital-to-analog converter configured to convert an input code into a cancellation current, and an amplifier circuit coupled to the digital-to-analog converter. The amplifier circuit is configured to receive a photocurrent comprising an intended light signal and an ambient current component, and convert the photocurrent into a signal voltage in response to removing the ambient current component from the photocurrent by an amount equal to the cancellation current. The apparatus may further include an analog-to-digital converter coupled to the amplifier circuit and configured to convert the signal voltage into the input code, and a matrix coupled to the amplifier circuit and configured to route the photocurrent from a photodiode to the amplifier circuit.

## Description

### BACKGROUND

Mixed-signal systems are electronic systems that process both analog and digital signals, combining the capabilities of analog and digital electronics in a single integrated platform. These systems are designed to interface with the real world, which is inherently analog, while leveraging the power and flexibility of digital processing. To manage analog inputs and perform digital processing, typical mixed-signal systems incorporate various specialized components.

### BRIEF DESCRIPTION OF DRAWINGS

The accompanying drawings, which form part of this specification, depict examples of the disclosure and, along with the description, illustrate the underlying principles of these examples. The detailed description is provided with reference to the accompanying figures. In the figures, the leading digit(s) of each reference number correspond to the figure where the reference number first appears. The figures may not be drawn to scale, and certain proportions or elements may be exaggerated in some figures to enhance the clarity of specific features.
FIG. 1A illustrates an exemplary mixed-signal system, in accordance with one or more embodiments of the disclosure.
FIG. 1B illustrates an exemplary matrix and amplifier array, in accordance with one or more embodiments of the disclosure.
FIG. 2 illustrates an exemplary DAC bias circuit and de-kick circuit, in accordance with one or more embodiments of the disclosure.
FIGS. 3A-3C illustrate an exemplary digital-to-analog converter, in accordance with one or more embodiments of the disclosure.
FIG. 4 illustrates exemplary timing, in accordance with one or more embodiments of the disclosure.

In the drawings, like reference symbols and numerals indicate the same or similar components. Like elements in the various figures are denoted by like reference symbols and numerals for consistency. Identical or similar items across different figures are indicated by the same reference numbers. Unless otherwise indicated, like elements and method steps are referred to with like reference numerals.

### DETAILED DESCRIPTION OF THE INVENTION

The following describes technical solutions in this specification with reference to the accompanying drawings. Exemplary embodiments are described in detail with reference to the accompanying drawings.

Mixed-signal systems may incorporate additional elements such as a photodiode 111 and/or other light-sensitive device, filters, and signal conditioning circuitry to enhance its performance in specific applications.

In many applications, photodiodes 111 must operate in environments where ambient light is present. This ambient light can interfere with the detection of the desired signal, potentially leading to reduced sensitivity and accuracy. The ambient light generates a background current in the photodiode 111, which can saturate the sensing circuitry and limit the dynamic range available for detecting the signal of interest.

To address this challenge, various techniques have been developed to mitigate the effects of ambient light on photodiode 111 performance. One approach involves using optical filters to selectively block unwanted wavelengths of light. Another method employs modulation techniques, where the signal of interest is encoded at a specific frequency that can be distinguished from the direct current (DC) or low-frequency components of ambient light.

Electronic compensation techniques have also been explored to cancel out the effects of ambient light. These methods typically involve measuring the ambient light level and subtracting its contribution from the overall detected signal. However, implementing such compensation schemes can be challenging, as they often require careful calibration and may introduce additional noise or complexity to the system.

The performance of photodiode 111 systems is often characterized by metrics such as signal-to-noise ratio (SNR) and dynamic range. Achieving high SNR and wide dynamic range in the presence of ambient light remains an ongoing area of research and development in the field of photodetection.

As photodiode 111 applications continue to expand into areas such as wearable devices, automotive sensors, and Internet of Things (IoT) nodes, there is a growing demand for compact, low-power solutions that can effectively operate in diverse lighting conditions. Addressing the challenges posed by ambient light interference while maintaining high sensitivity and accuracy is an active area of investigation in the optoelectronics community. Accordingly, there is a need in the art for an improved mixed-signal system.

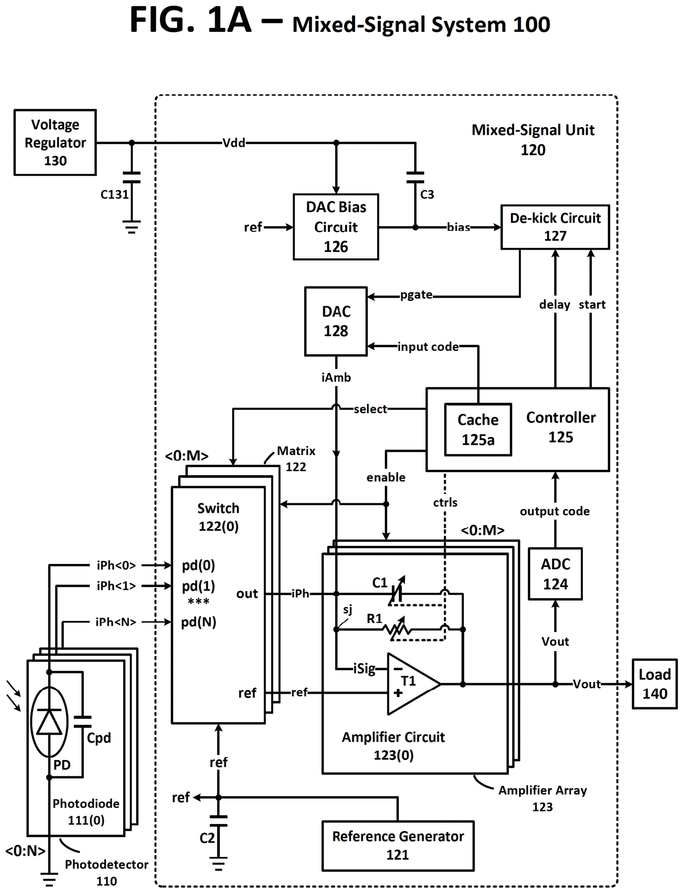

FIG. 1A illustrates an example mixed-signal system 100. In various implementations, mixed-signal system 100 may convert real-world analog input (such as sound, light, temperature, or RF waves) into digital data for further processing. Key components of mixed-signal system 100 may include a photodetector 110, a mixed-signal unit 120, a voltage regulator 130, a regulator capacitor C131, and a load 140. Those skilled in the art will appreciate there may be additional components in mixed-signal system 100.

The photodetector 110 may include a plurality of photodiodes 111(0)-111(N). For instance, the photodetector 110 may be an arrangement of the photodiodes 111(0)-111(N) in a pattern or configuration, with "N" being an integer number of photodiodes 111.

The photodiodes 111(0)-111(N) may be collectively referred to as "photodiodes 111" and any individual photodiode 111(0)-111(N) may be referred to as a "photodiode 111." Each photodiode 111 may incorporate a light-sensitive device (PD) that detects light and generates a photocurrent iPh<i> proportional to the intensity of the detected light. A photodiode 111 may also include parasitic capacitance (Cpd). This parasitic capacitance (Cpd) may arise from the inherent physical structure of the photodiode 111, particularly at the p-n junction. Parasitic capacitance (Cpd) can affect the frequency response and noise characteristics of the photodiode 111.

Photodiodes 111 may serve an integral role in numerous fields, including optical communications, imaging systems, and environmental sensing. For instance, a photodiode 111 may convert light into a photocurrent <i>. By way of example, the photodetector 110 may detect and measure light intensity across different spatial regions, enabling applications in imaging, spectroscopy, and other technologies. The arrangement of multiple photodiodes 111 in the photodetector 110 may allow for simultaneous light detection, providing spatial resolution and enabling the capture of detailed light distribution information.

The mixed-signal unit 120 is an apparatus that may be found in various types of electrically powered devices. For example, the mixed-signal unit 120 may be found in a mobile communication device such as a mobile phone, a smartphone, a cell phone, or a tablet. The mixed-signal unit 120 may be found in a wearable device, a smartwatch, a fitness tracker or a personal digital assistant. The mixed-signal unit 120 may be found in a media device for playing and/or recording media. For instance, the mixed-signal unit 120 may include a portable music player, an audio recorder, an audio converter, an audio player, or a speaker (e.g., a Bluetooth-enabled speaker). The mixed-signal unit 120 may be found in video devices such as a video display, a video recorder, a camera, or another video device. The mixed-signal unit 120 may be found in a driver assistance module in a vehicle, a light detection and ranging sensor, an emergency transponder, a pager, a watch, a satellite television receiver, a stereo receiver, a computer system, a music player, a laptop or tablet computer, a home appliance, or various other devices. The mixed-signal unit 120 may be found in a computing/entertainment device for a vehicle.

Voltage regulator 130 is hardware that may convert power from an external power source into a constant, unvarying system voltage (Vdd) despite any fluctuation in load conditions on the mixed-signal system 100. For instance, the voltage regulator 130 may reduce or eliminate voltage fluctuations that may appear in the system voltage (Vdd). The system voltage (Vdd) may be a direct current (DC) voltage. Voltage fluctuations are transients in the voltage level of the system voltage (Vdd). Transients may include voltage spikes, momentary increases and decreases of voltage, voltage ripple and/or other sudden uncontrolled transitions that may occur in the system voltage (Vdd). The voltage regulator 130 may maintain the system voltage (Vdd) at a constant voltage level despite any fluctuation in the system voltage (Vdd).

As used herein, the term "transient effects" refers to temporary, short-lived electrical disturbances or fluctuations that occur in the mixed-signal unit 120, particularly during switching operations or rapid changes in current flow. These effects may include voltage spikes, current surges, or other brief instabilities that can potentially introduce noise, distortion, or errors in the mixed-signal unit 120. Transient effects are of particular concern in the context of ambient light cancellation, where they may temporarily disrupt the accuracy of photocurrent measurements or the generation of cancellation current (iAmb)s (iAmb).

As used herein, the term "switching operations" refers to the process of changing the state or configuration of various components within the mixed-signal unit 120, particularly in the context of routing photocurrents through the matrix or activating different elements of the digital-to-analog converter. These operations involve rapid transitions between on and off states or between different signal paths, which can potentially generate transient effects. Switching operations are critical for the dynamic functionality of the mixed-signal unit 120 but require careful management to minimize their impact on signal integrity and measurement accuracy.

Load 140 is an impedance that the mixed-signal system 100 may happen to be driving. In some implementations, the load 140 may be an electronic circuit and/or an electronic device. For instance, the load 140 may include a digital signal processor, a microcontroller, a microprocessor, a display driver, a communication interface, and/or any other device that consumes electrical power.

The mixed-signal unit 120 may include a reference generator 121, a matrix 122, an amplifier array 123, an analog-to-digital converter (ADC) 124, a controller 125, the DAC bias circuit 126, a de-kick circuit 127, a digital-to-analog converter (DAC) 128 and a controller 125. In some cases, mixed-signal unit 120 may be implemented as an integrated circuit that combines, on a single chip, the reference generator 121, the matrix 122, the amplifier array 123, the ADC 124, the controller 125, the DAC bias circuit 126, the de-kick circuit 127, and the DAC 128. Those skilled in the art will appreciate there may be additional components in mixed-signal unit 120.

A reference generator 121 may produce a reference voltage (ref) that is both stable and unvarying. Despite any fluctuation of any loading condition produced by the mixed-signal system 100, the reference generator 121 may maintain the reference voltage (ref) at a voltage level even when other parts of the mixed-signal system 100 are in a sleep mode. The sleep mode may be a low-power mode.

The matrix 122 may function as an interface between the photodetector 110 and the mixed-signal unit 120. By way of illustration, the matrix 122 may regulate signal flow from the photodiodes 111 to the amplifier array 123. For example, a plurality of photodiodes 111 may be arranged in an array configuration, with outputs routed through the matrix 122 for signal processing. The matrix 122 may include a plurality of the switches 122(0)-122(M). The number "M" is an integer number. Any individual switch 122(0)-122(M) may be referred to as a switch 122. More than one of the switches 122(0)-122(M) may be collectively referred to as "switches 122." A switch 122 may receive one or more photocurrents iPh<0> to iPh<N> from the photodetector 110 and route the photocurrent iPh<i> to the amplifier array 123.

The amplifier array 123 may comprise a plurality of amplifier circuits 123(0)-123(M) arranged in a specific configuration. Any one of the amplifier circuits 123(0)-123(M) may be individually referred to herein as "amplifier circuit 123." Amplifier circuits 123(0)-123(M) may be collectively referred to herein as "amplifier circuits 123."

For processing the photocurrents iPh<i> received through the matrix 122, an amplifier circuit 123 may include capacitor C1 and resistor R1. TIA amplifier (T1) is a transimpedance amplifier.

The matrix 122 may electrically connect the photodetector 110 to the TIA amplifier (T1). Those skilled in the art will appreciate there may be additional components in the amplifier circuit 123. This modular approach may allow for scalable and flexible photodiode 111 systems suitable for various applications, including imaging, light detection, and optical communication.

The TIA amplifier (T1) may condition the photocurrent iPh<i> to generate the signal voltage (Vout). On such occasions, the TIA amplifier (T1) may condition the photocurrent iPh<i> received from the photodetector 110. As used herein, the term "photocurrent" refers to the electrical current generated by a photodiode 111 in response to incident light on the photodiode 111.

The term "incident light" refers to electromagnetic radiation that falls upon or strikes the surface of the photodiodes 111 in the photodetector 110. Various sources may generate the incident light, including the intended light signal (iSig) being measured as well as sources of ambient light in the environment. The incident light serves as the primary input that generates photocurrents iPh<i> in the photodiodes 111, which the mixed-signal unit 120 then processes. The intensity, wavelength, and temporal characteristics of the incident light directly influence the magnitude and composition of the photocurrents iPh <i> generated by the photodiodes 111.

As used herein, the term "ambient light" refers to background illumination on a photodiode 111 that may exist in the environment where the mixed-signal unit 120 is operating. The ambient light may originate from natural or artificial sources other than from a light source being measured or detected by the photodiodes 111. This ambient light may include, but is not limited to, sunlight, room lighting, or any other incidental light that induces a photocurrent iPh<i> in a photodiode 111, potentially interfering with the detection of an intended light signal (iSig).

The term "intended light signal" refers to the specific light emission that photodiode 111 detects, distinct from ambient light. A controlled light source may generate the intended light signal, such as an LED, laser, or other emitter that forms part of the mixed-signal system 100. The intended light signal (iSig) may incorporate modulation, pulsing, or other control methods to allow differentiation from ambient light. The design of the mixed-signal system 100 may specify known or controlled parameters for the intensity, wavelength, and temporal characteristics of the intended light signal, allowing for optimized detection and processing by the photodiodes 111 and associated circuitry in the mixed-signal unit 120.

The photocurrent iPh<i> may comprises both the ambient light component and the intended light signal (iSig). The photocurrent iPh<i> is proportional to the intensity of light falling on each photodiode 111 and form the primary analog input to the mixed-signal unit 120. The intensity of light falling on the photodiode 111 directly determines the magnitude of the photocurrent iPh<i>. The photocurrent iPh<i> forms the primary analog input to the mixed-signal unit 120.

The mixed-signal unit 120 requires accurate separation and cancellation of the ambient light component from the total photocurrent iPh<i> to isolate and measure the desired intended light signal (iSig). In the context of this invention, the amplifier circuit 123 may condition the photocurrent iPh<i> for further processing and ambient light cancellation.

As used herein, the term "conditioning the photocurrent" refers to the process of preparing and optimizing, for subsequent processing and analysis, the electrical signals that are generated by the photodiodes 111 in response to incident light. This conditioning process may involve amplification, filtering, and/or other signal processing techniques performed by the amplifier circuit 123 to improve the signal-to-noise ratio, adjust the signal level, and remove unwanted frequency components or interference. The goal of conditioning a photocurrent iPh<i> is to enhance the quality and usability of the photocurrent iPh<i>, making it suitable for accurate conversion by the ADC 124 and effective ambient light cancellation.

As used herein, the term "ambient light cancellation" refers to a process of mitigating or eliminating the effects of the ambient light. Ambient light cancellation may involve measuring ambient light levels using the ADC 124, generating a cancellation current (iAmb), and subtracting this cancellation current (iAmb) from the photocurrent iPh<i> to isolate the desired intended light signal (iSig). The purpose of ambient light cancellation is to improve the signal-to-noise ratio and dynamic range of the photodiode 111 measurements by removing the influence of unwanted ambient light.

The term "ambient light component" refers to the portion of the photocurrent iPh<i> that a photodiode 111 generates in response to the presence of ambient light in the environment. The ambient light component remains distinct from the intended light signal (iSig) being measured. This ambient light component represents unwanted light that may interfere with accurate detection of the intended light signal (iSig). The ambient light component may vary in intensity and spectral characteristics depending on environmental conditions environment where the mixed-signal unit 120 is operating. These environmental conditions may include sunlight, artificial lighting, or other incidental light sources that affect the photodiode 111.

As used herein, the term "cancellation current (iAmb)" refers to an electrical current generated for the purpose of counteracting the effects of ambient light. This cancellation current (iAmb) is designed to offset or "cancel out" the ambient light component from a photocurrent iPh<i>, allowing the mixed-signal unit 120 to isolate and measure only the desired intended light signal (iSig). Based on the quantized ambient light levels by the ADC 124 and processed by the controller 125, the DAC 128 may dynamically adjust the magnitude of the cancellation current (iAmb).

In some implementations, the TIA amplifier (T1) may include a feedback network comprising the resistor R1 and the capacitor C1. The resistor R1 and the capacitor C1 may play a crucial role in determining the performance characteristics of the TIA amplifier (T1). For instance, the capacitor C1 may perform in conjunction with a resistor R1 to set the gain and bandwidth characteristics of the TIA amplifier (T1).

Variable capacitor C1 is an electronic component whose capacitance that one of the configuration parameters (ctrls) from the controller 125 may dynamically adjust. The term "capacitance adjustment" may refer to the process of altering the capacitance value of a variable capacitor C1. This adjustment may be achieved through various means, such as mechanical manipulation, electronic control by a signal from the controller 125, or in response to external stimuli like voltage or temperature. Additionally, this adjustment may be performed automatically by the controller 125, or manually by an external user or system. Variable capacitor C1 may play a crucial role in tuning circuit characteristics of the amplifier circuit 123, such as frequency response or impedance matching by the amplifier circuit 123. The ability to adjust capacitance may allow for fine-tuning of circuit parameters, such as bandwidth, resonance frequency, or phase compensation.

"Dynamic range enhancement" may refer to the process of modifying parameters of the amplifier circuit 123 to maximize the range of the intended light signal (iSig) that can be accurately processed by the TIA amplifier (T1). This dynamic range enhancement may involve adjusting the capacitance of the variable capacitor C1 to optimize the frequency response of the TIA amplifier (T1) or to compensate for parasitic capacitance (Cpd) in the photodiode 111, thereby improving overall performance and sensitivity of the amplifier circuit 123.

Variable resistor R1 is an electronic component whose resistance that another of the configuration parameters (ctrls) from the controller 125 may dynamically adjust. The term "resistance adjustment" may refer to the process of altering the resistance value of the variable resistor R1. This adjustment may be achieved through various means, such as mechanical manipulation, electronic control by a signal from the controller 125, or in response to external stimuli like light, temperature, or applied voltage. In addition, this adjustment may be performed automatically by the controller 125, or manually by an external user or system.

Variable resistor R1 may play a crucial role in optimizing the performance of the TIA amplifier (T1) or other components within the mixed-signal unit 120. For example, the variable resistor R1 may set the gain of the TIA amplifier (T1). The ability to alter the resistance value of the variable resistor R1 may allow for fine-tuning of circuit characteristics, such as gain, bandwidth, or noise performance of the TIA amplifier (T1), in response to changing operating conditions or requirements.

The amplifier circuit 123 may convert the photocurrent iPh<i> into the signal voltage (Vout) after removing the ambient current component from the photocurrent iPh<i>. The signal voltage (Vout) is proportional to the intended light signal (iSig). The amplifier circuit 123 may perform this conversion in response to subtracting an amount equal to the cancellation current (iAmb) from the photocurrent iPh<i>. By removing this ambient current component, the amplifier circuit 123 may effectively isolate the intended light signal (iSig) from the ambient current component. The signal voltage (Vout) may represent a cleaner, more accurate representation of the intended light signal (iSig), free from the interference of ambient light. This process may enhance the overall sensitivity and dynamic range of the mixed-signal unit 120, allowing for more precise light measurements across various environmental conditions. The conversion of the intended light signal (iSig) to a signal voltage (Vout), after ambient light cancellation, may enable subsequent processing stages to work with a refined signal that more accurately reflects the light of interest, improving the overall performance and reliability of the mixed-signal system 100.

The ADC 124 may receive a continuous analog signal such as the signal voltage (Vout) from the TIA amplifier (T1) and convert the signal voltage (Vout) into an output code. The ADC 124 may quantize the signal voltage (Vout) by sampling the signal voltage (Vout) at regular discrete time intervals and converting the signal voltage (Vout) into the output code. The ADC 124 may enable the conversion of the light intensity detected by each photodiode 111 detected by the photodiodes 111 into a digital format that the controller 125 may process for ambient light cancellation. The term "quantized photocurrent" refers to a digital representation of the signal voltage (Vout). The ADC 124 may assign a numerical value (the output code) to each sample based on the voltage level of the signal voltage (Vout).

The ADC 124 may sample the signal voltage (Vout) and quantize each sample into an output code. This quantization process may involve mapping the continuous range of analog values for the signal voltage (Vout) to a discrete set of digital values, typically expressed as binary numbers.

As used herein, the term "digital code word" refers to a series of binary digits that collectively represent the magnitude of a specific analog value in digital form. The output code may comprise a digital code word consisting of a series of binary digits that collectively represent the magnitude of the signal voltage (Vout) and discrete levels of light intensity detected by each photodiode 111. The resolution and accuracy of the digital representation may depend on factors such as the bit depth, sampling rate, and input voltage range of the ADC 124. The bit depth of the ADC 124 may determine the resolution of these quantized photocurrents, with higher bit depths allowing for more precise representation of the original analog signal. For example, a 10-bit ADC 124 may represent the analog signal using 1024 discrete levels. If the input range of the ADC 124 measures 0 to 5 volts, a 2.5V signal would correspond to a digital output value of approximately 512. The number of bits in the output code determines the resolution and precision of the analog-to-digital conversion process, with a higher number of bits allowing for more precise representation of the signal voltage (Vout).

The output code represents a digital quantization of the signal voltage (Vout), with each discrete digital value corresponding to a specific voltage level. The ADC 124 maintains a linear relationship between the output code and the magnitude of the signal voltage (Vout). This linear relationship ensures that changes in the signal voltage (Vout) accurately reflect in the digital representation. The linearity of this conversion maintains the integrity of the light intensity information throughout the signal processing chain. For example, the ADC 124 may have a resolution of 10 bits and an input range of 0 to 5V. Each increment in the output code may represent a voltage step of approximately 4.88mV (5V / 2¹⁰). An increase in the signal voltage (Vout) by 4.88mV may result in an increase of 1 in the output code. The ADC 124 maintains the linear proportionality across the entire range of the ADC 124.

This linear relationship enables accurate ambient light cancellation and signal processing in the mixed-signal unit 120. The linear relationship allows the controller 125 to precisely interpret the digitized photocurrent measurements and generate appropriate input codes for the DAC 128. The linearity ensures that the cancellation current (iAmb) generated by the DAC 128 accurately corresponds to the ambient light component in the photocurrent iPh<i>. The accurate correspondence enables effective isolation of the intended light signal (iSig).

The resolution provided by ADC 124 may allow for precise measurement of ambient light conditions across a wide dynamic range. This dynamic range may include the ratio between the largest and smallest measurable light intensities that the mixed-signal unit 120 may accurately detect and process. A wide dynamic range may enable the mixed-signal unit 120 to operate effectively in various lighting conditions, from low-light environments to bright sunlight. The ADC 124 may be particularly useful in applications requiring high sensitivity to small variations in light intensity, such as medical imaging, scientific instrumentation, or advanced driver assistance systems where subtle variations in light intensity can provide valuable information. By measuring the ambient light level for each photodiode 111, ADC 124 may contribute significantly to the overall performance and versatility of the mixed-signal unit 120.

The controller 125 may be implemented as electronic hardware that includes digital circuits, analog circuits, or a combination of both digital and analog circuits. Digital circuits may include switches and gates that are suitable to process digital gate signals. Analog circuits may include analog components that are suitable to process analog gate signals. In some implementations the controller 125 may include, but is not limited to, at least one of a microcontroller, a microprocessor, a single processor, a multiprocessor, a programmable processor, an embedded controller (EC), a central processing unit (CPU), an accelerated processing unit (APU), an application specific integrated circuit (ASIC), field programmable gate arrays (FPGA), control logic, or a state machine.

As used herein, the term "control signals" refers to digital instructions generated by the controller 125 based on processed quantized photocurrents. These control signals direct the operation of various components within the mixed-signal unit 120, particularly the DAC 128, to facilitate ambient light cancellation. Control signals may include, but are not limited to, the input code representing the magnitude of the cancellation current (iAmb), the timing signals (delay, start) for synchronizing cancellation operations, and configuration parameters (ctrls) for optimizing the performance of the TIA amplifier (T1) and other circuit elements involved in the ambient light cancellation process.

As used herein, the term "control signals for ambient light cancellation" refers to digital instructions generated by the controller 125 based on processed quantized photocurrents. These signals direct the operation of various components within the mixed-signal unit 120, particularly the DAC 128, to facilitate the removal or mitigation of ambient light effects on photodiode 111 measurements. Control signals may include, but are not limited to, the input code representing the required amplitude level of cancellation current (iAmb), timing signals for synchronizing cancellation operations, and configuration parameters for optimizing the performance of the DAC 128 and other circuit elements involved in the ambient light cancellation process. The purpose of these control signals is to enable precise and dynamic adjustment of the cancellation current (iAmb) to effectively isolate the desired signal current from the total photocurrent detected by the photodiodes 111.

The controller 125 may convert the output code from the ADC 124 into the input code for the DAC 128. During this conversion process, the controller 125 may receive the output code containing information about the intended light signal (iSig) and, in some instances, the ambient light component of the photocurrent iPh<i>. The controller 125 may analyze the output code to determine the ambient light level for the photodiode 111.

The controller 125 may calculate the magnitude of cancellation current (iAmb) needed to offset the ambient light component and generate the appropriate input code that instructs the DAC 128 to produce the calculated cancellation current (iAmb). The controller 125 may employ various algorithms and processing techniques to perform this conversion accurately. The controller 125 may consider factors such as the gain and bandwidth settings of the TIA amplifier (T1), the characteristics of the photodiodes 111, and any calibration data stored in the cache 125a. The accurate conversion of the output code into the input code ensures the DAC 128 generates a cancellation current (iAmb) that precisely matches and offsets the ambient light component in the photocurrent iPh<i>. This precise matching isolates the intended light signal (iSig) and maximizes the sensitivity and dynamic range of the mixed-signal unit 120 across various ambient lighting conditions.

The mixed-signal unit 120 may also include a filter capacitor C2 and a bypass capacitor C3. The filter capacitor C2 is electrically connected directly to a ground, which may reduce noise in the reference voltage (ref) and improve the overall performance of the reference generator 121. In some cases, the filter capacitor C2 may be implemented as a metal-oxide-metal (MOM) capacitor with a metal box shield to mitigate coupling.

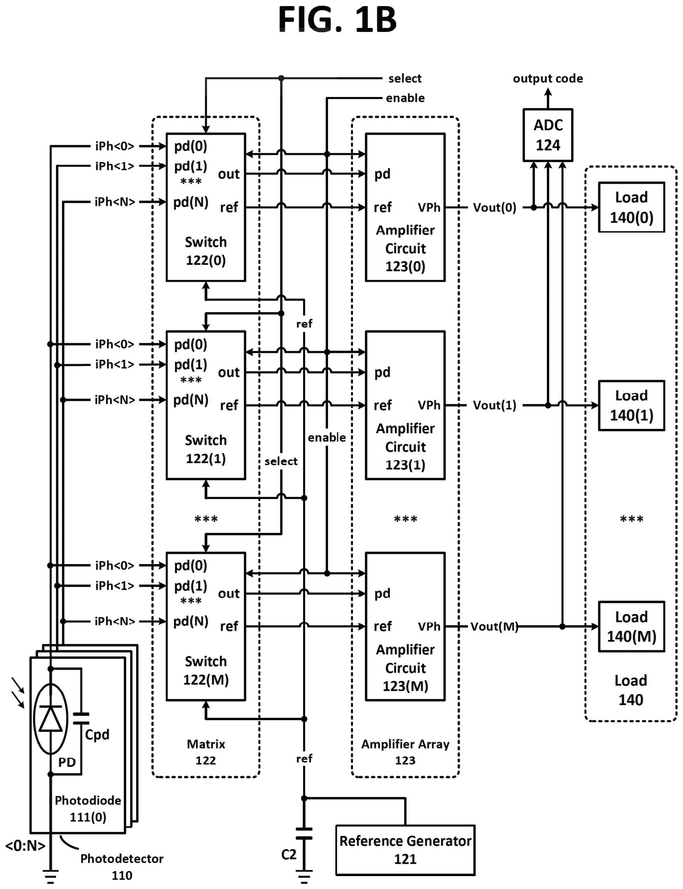

Turning now to FIG. 1B, illustrated are details pertaining to the matrix 122 and the amplifier array 123 of the mixed-signal unit 120.

The matrix 122 is a multi-input, multi-output switching device that allows N inputs to be selectively routed to M outputs, providing efficient management of photocurrents iPh<i> in the mixed-signal unit 120. Unlike a standard N-to-1 multiplexer, which selects a single input from N input and directs the input to one output, the matrix 122 may extend this functionality by managing multiple selection paths simultaneously. As an illustration of this functionality, the matrix 122 may comprise "M" identical switches 122(0)-122(M) that exist in parallel. Each of the switches 122(0)-122(M) may independently select one the inputs pd(0)- pd(N) based on the value of the select signal. In such cases, each of the switches 122(0)-122(M) may route one of the inputs pd(0)-pd(N) to an output (out) based on the value of the select signal so that the matrix 122 may process multiple streams of photocurrents iPh<0> to iPh<N> in parallel.

Load 140 may include loads 140(0)-140(M). Any one of the loads 140(0)-140(M) may be individually referred to as "load 140." A plurality of the loads 140(0)-140(M) may be collectively referred to as "loads 140." The loads 140 may receive and process output voltages Vout(0)-Vout(M) produced by the amplifier array 123. Any one of the outputs Vout(0)-Vout(M) may be individually referred to as "signal voltage (Vout)." A plurality of digital outputs Vout(0)-Vout(M) may be collectively referred to as "signal voltages (Vout)."

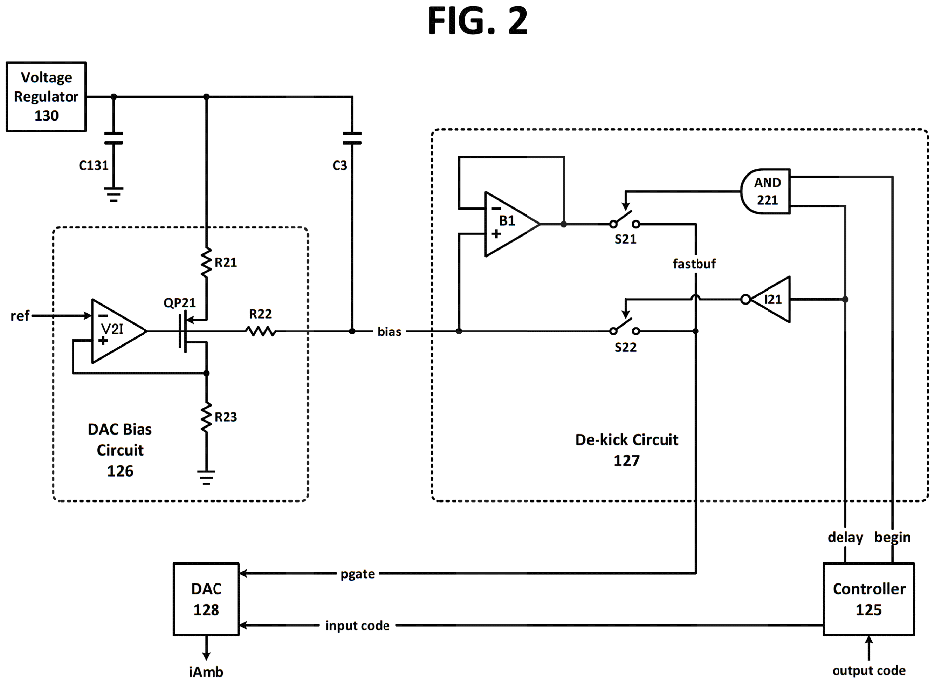

Turning now to FIG. 2, examples of the DAC bias circuit 126 and the de-kick circuit 127 are illustrated. The DAC bias circuit 126 and the de-kick circuit 127 may work in concert to ensure stable, accurate, and low-noise operation of the mixed-signal unit 120.

The DAC bias circuit 126 may include a voltage-to-current (V2I) circuit, a transistor QP21 and resistors R21-R23. Those skilled in the art will appreciate there may be additional components in the DAC bias circuit 126.

The DAC bias circuit 126 may produce a low-noise, high power supply rejection ratio (PSRR) ambient bias signal. For instance, the DAC bias circuit 126 may generate the stable and clean bias signal to contribute significantly to the overall accuracy and reliability of the ambient light cancellation process.

As used herein, the term "bias signal" refers to a carefully controlled voltage or current applied to an electronic component, such as the DAC 128, to establish its optimal operating point. In the context of this mixed-signal unit 120, the bias signal specifically refers to the reference voltage or current provided by the DAC bias circuit 126 to the DAC 128, which enables the DAC 128 to accurately generate cancellation current (iAmb)s (iAmb) for ambient light compensation. The stability and accuracy of this bias signal directly influence the performance and reliability of the ambient light cancellation process.

As used herein, the term "low-noise bias signal" refers to an electrical signal generated by the DAC bias circuit 126 to provide a stable reference voltage or current for the DAC 128 with minimal unwanted fluctuations or interference. This signal is characterized by a high signal-to-noise ratio and low susceptibility to power supply variations, ensuring precise and accurate operation of the DAC 128 in generating cancellation current (iAmb)s (iAmb) for ambient light compensation. The low-noise characteristic is critical for maintaining the overall accuracy and sensitivity of the mixed-signal unit 120, particularly in applications requiring high-precision photodiode 111 measurements.

As used herein, the term "power supply rejection ratio (PSRR)" refers to a measure of how effectively an electronic circuit, particularly the DAC bias circuit 126, can suppress or reject noise and fluctuations from its power supply. PSRR is typically expressed in decibels (dB) and indicates the circuit's ability to maintain a stable output despite variations in the supply voltage. In the context of the ambient bias signal, a high PSRR ensures that the reference voltage or current provided to the DAC 128 remains consistent and unaffected by power supply instabilities, which is crucial for accurate ambient light cancellation. A higher PSRR value indicates better rejection of power supply noise and improved circuit performance, contributing to the overall precision and reliability of the mixed-signal unit 120's light sensing capabilities.

As used herein, the term "low-noise, high power supply rejection ratio (PSRR) ambient bias signal" refers to a precisely controlled electrical signal generated by the DAC bias circuit 126 to provide a stable reference voltage or current for the DAC 128 used in ambient light cancellation. This signal is characterized by minimal unwanted fluctuations or interference (low-noise) and a high ability to suppress variations from the power supply (high PSRR). The low-noise property ensures that the bias signal itself does not introduce significant distortions or errors into the cancellation current (iAmb). The high PSRR characteristic allows the bias signal to remain stable despite fluctuations in the power supply voltage, which is critical for maintaining accurate and consistent ambient light cancellation across varying operating conditions. This specialized bias signal enables precise and reliable operation of the DAC 128 in generating the cancellation current (iAmb), thereby enhancing the overall accuracy and sensitivity for the ambient light compensation capabilities of the mixed-signal unit 120.

The bias signal may be crucial for maintaining optimal performance of the DAC 128 across varying ambient light conditions and power supply fluctuations. For instance, the bias signal may ensure that the DAC 128 operates in an optimal range, maintaining linearity and accuracy in generating a cancellation current (iAmb) to counteract ambient light effects on photodiodes 111. In some implementations, this bias signal may serve as a reference voltage for the DAC 128.

The bypass capacitor C3 may provide a bypass to the system voltage (Vdd), which improves the PSRR the DAC 128. As used herein, the term "power supply rejection ratio" may refer to a measure of how well a circuit can suppress and/or reject noise and fluctuations from a power supply. A PSRR is typically expressed in decibels (dB) and indicates the circuit's ability to maintain a stable output despite variations in the supply voltage (Vdd). For instance, a higher PSRR value indicates better rejection of power supply noise and improved circuit performance. Other implementations may eliminate the bypass capacitor C3.

The de-kick circuit 127 may include an AND gate 221, an inverter I21, a buffer B1, and switches S21-S22. The de-kick circuit 127 may output a pgate signal to the DAC 128 to regulate the operation of the DAC 128 during ambient light cancellation. The term "operation" may refer to the functional processes and behaviors of the DAC 128. This operation may encompass the conversion of digital input codes into the cancellation current (iAmb), the dynamic adjustment of output current levels in response to control signals, and the management of internal circuit states to minimize noise and transient effects. Those skilled in the art will appreciate there may be additional components in the de-kick circuit 127.

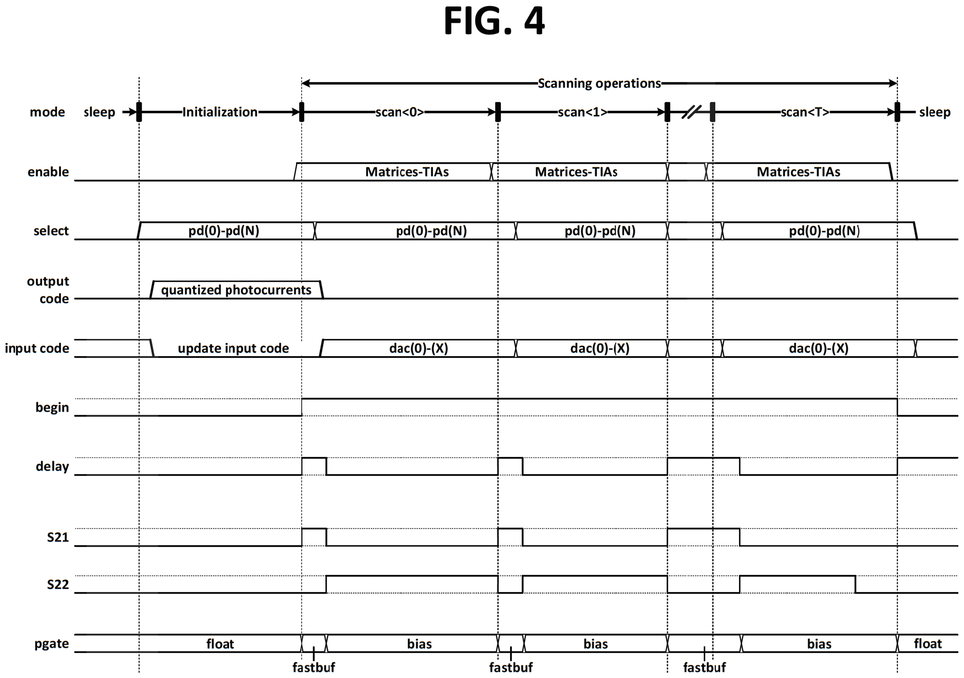

The de-kick circuit 127 may play a crucial role in minimizing any kickback that may occur during switching operations or rapid changes in current flow. The de-kick circuit 127 may minimize the kickback that could otherwise be introduced into the mixed-signal unit 120. Specifically, the de-kick circuit 127 may reduce unwanted voltage spikes or current surges by carefully timing the creation of the pgate signal in relation to the delay and begin signals, as illustrated in FIG. 4.

In the context of the DAC 128, kickback may manifest as momentary disturbances in the bias signal, potentially leading to inaccuracies in the generated cancellation current (iAmb). TIA amplifier T1 and/or other analog components of the mixed-signal unit 120 may experience kickback when the DAC 128 adjusts the bias signal. Kickback may include an undesired voltage or current transient that may occur in the mixed-signal unit 120, particularly during rapid changes in current flow in the mixed-signal unit 120 and/or when controller 125 switches between different operating modes. Kickback may introduce noise, distortion, or instability in sensitive analog circuits, potentially degrading the overall performance of the mixed-signal unit 120.

By reducing kickback, the de-kick circuit 127 may contribute to maintaining signal integrity of the cancellation current (iAmb), thereby improving the accuracy of light measurements across various operating conditions. The de-kick circuit 127 may enable more precise light measurements across a wide range of ambient lighting conditions by coordinating this process during the initialization mode of each measurement cycle or when transitioning between different operating modes of the mixed-signal unit 120.

The de-kick circuit 127 may transition the pgate signal between a "fastbuf" level used for pre-charging process the DAC 128 to mitigate kickback, and a "bias" level used for normal operation. The "fastbuf level" may refer to a voltage level of the pgate signal used during the pre-charging process to pre-charge the DAC 128. The "bias level" may refer to the steady-state voltage level of the pgate signal applied to the DAC 128 during normal operation. The combination of the precisely timed pgate signal from the de-kick circuit 127 and the low-noise, high-PSRR bias signal from the DAC bias circuit 126 may contribute significantly to the overall performance and reliability of the mixed-signal unit 120. The term "pre-charging process" may refer to a process of rapidly charging internal capacitances within the DAC 128 prior to normal operation of the DAC 128, as illustrated in the example of FIG. 4.

The pre-charging process may minimize kickback and transient disturbances when the mixed-signal unit 120 transitions between operating modes. During the pre-charging process, the de-kick circuit 127 may apply a higher voltage level (fastbuf level) to the pgate signal, which connects to the gates of transistors QP0-QPX within the DAC 128. The pre-charging process may ensure that the DAC 128 reaches a stable initial state quickly, enabling accurate and low-noise generation of the cancellation current (iAmb) immediately upon entering normal operation. The pre-charging process may specifically mitigate these kickback by establishing well-defined initial conditions for the DAC 128 before the DAC 128 enters normal operation.

The term "normal operation" may refer to the steady-state functioning of the DAC 128 during active ambient light cancellation. Normal operation may distinguish from initialization or pre-charging process phases, allowing the DAC 128 to perform the primary function of dynamic ambient light cancellation within the mixed-signal unit 120. In normal operation, the DAC 128 may receive an input code from the controller 125 and generate a corresponding cancellation current (iAmb) to counteract ambient light components in the photocurrent iPh<i>.

The pgate signal applied to the DAC 128 during normal operation may maintain at the bias level, establishing optimal operating conditions for the internal transistors to ensure accurate and low-noise generation of the cancellation current (iAmb).

The de-kick circuit 127 may design the fastbuf level to rapidly charge the gate capacitance of transistors QP0-QPX within the DAC 128, thereby reducing kickback when the mixed-signal unit 120 transitions between operating modes.

The bias level may establish the optimal operating point for the transistors QP0-QPX within the DAC 128, ensuring accurate and low-noise generation of the cancellation current (iAmb). The DAC bias circuit 126 may carefully regulate the bias level to maintain high power supply rejection ratio and minimize the effects of the supply voltage (Vdd) variations on the cancellation current (iAmb) output. The fastbuf level may exceed the bias level to enable quick settling of the DAC 128.

The de-kick circuit 127 may process the bias signal along with the begin and delay signals to generate a pgate signal. The de-kick circuit 127 may carefully control the timing and levels of the pgate signal to minimize transient effects and ensure accurate generation of the cancellation current (iAmb) across different operating modes of the mixed-signal unit 120.

The DAC 128 may maintain the ability to modulate the cancellation current (iAmb) rapidly and accurately in response to changing ambient light conditions, enabling effective isolation of the intended light signal iSig from the total photocurrent iPh detected by the photodiodes 111. By way of example, the DAC 128 may convert the digital code word into the cancellation current (iAmb). The controller 125 may send an input code as a digital code word to the DAC 128. The input code may represent a digital value corresponding to the amount of cancellation current (iAmb) that the DAC 128 may generate. The input code may include a series of binary digits that instructs the DAC 128 on the generation of the analog cancellation current (iAmb). For example, an 8-bit DAC 128 may include a sequence of 8 binary digits, where each digit represents a fraction of the full-scale output current.

The DAC 128 may generate a cancellation current (iAmb) that counteracts the ambient light current detected by a photodiode 111. For instance, the DAC 128 may generate a precise cancellation current (iAmb) based on the digital input code received from the controller 125. The cancellation current (iAmb) may comprise a continuous, variable analog electrical current that the DAC 128 may generate based on the received input code. For instance, the DAC 128 may interpret the input code and convert the input code into a precise analog cancellation current (iAmb), enabling accurate ambient light cancellation in the amplifier circuit 123. The number of bits in the input code may directly impact the precision of the ambient light cancellation process in the mixed-signal unit 120 that may determine the resolution and accuracy of the cancellation current (iAmb) produced by the DAC 128.

The magnitude of the cancellation current (iAmb) may directly correspond to the value encoded in the input code, allowing the DAC 128 to provide fine-grained control over the ambient light cancellation process. This direct correspondence may enable the DAC 128 to generate a cancellation current (iAmb) that accurately matches the ambient light component detected in the photocurrent iPh<i>. For example, if the input code represents a higher value, the DAC 128 may produce a larger cancellation current (iAmb) to counteract a stronger ambient light presence. Conversely, a lower value in the input code may result in the DAC 128 generating a smaller cancellation current (iAmb) for environments with less ambient light. This fine-grained control may allow the mixed-signal unit 120 to adapt to varying lighting conditions, ensuring optimal performance across a wide range of environments. The precision of this correspondence between the input code and the cancellation current (iAmb) may be crucial for maintaining high sensitivity and accuracy in the photodiode 111 measurements, particularly when detecting small signal currents iSig in the presence of potentially much larger ambient light components.

The DAC 128 may produce the analog cancellation current (iAmb) to counteract the ambient light component of the photocurrent iPh<i> detected by the photodiodes 111. The DAC 128 may employ resistor ladders or current steering techniques to achieve high precision and low noise in generating the cancellation current (iAmb). The resolution and accuracy of the DAC 128 directly impacts the effectiveness of the ambient light cancellation and the overall performance of the mixed-signal unit 120. The DAC 128 may generate the cancellation current (iAmb) with precise calibration to match and offset the ambient current component within the photocurrent iPh<i>.

This cancellation current (iAmb) may allow only the intended light signal (iSig) of a photocurrent iPh<i> to pass to the TIA amplifier (T1), effectively utilizing the full dynamic range of the TIA amplifier (T1) for a desired photocurrent iPh<i>. By cancelling the ambient light current in the photocurrent iPh<i>, the mixed-signal unit 120 may enable the use of a higher resistance value for the resistor R1. A higher resistance value for the resistor R1 may contribute to reduced overall system power consumption and improve the noise performance of the mixed-signal unit 120.

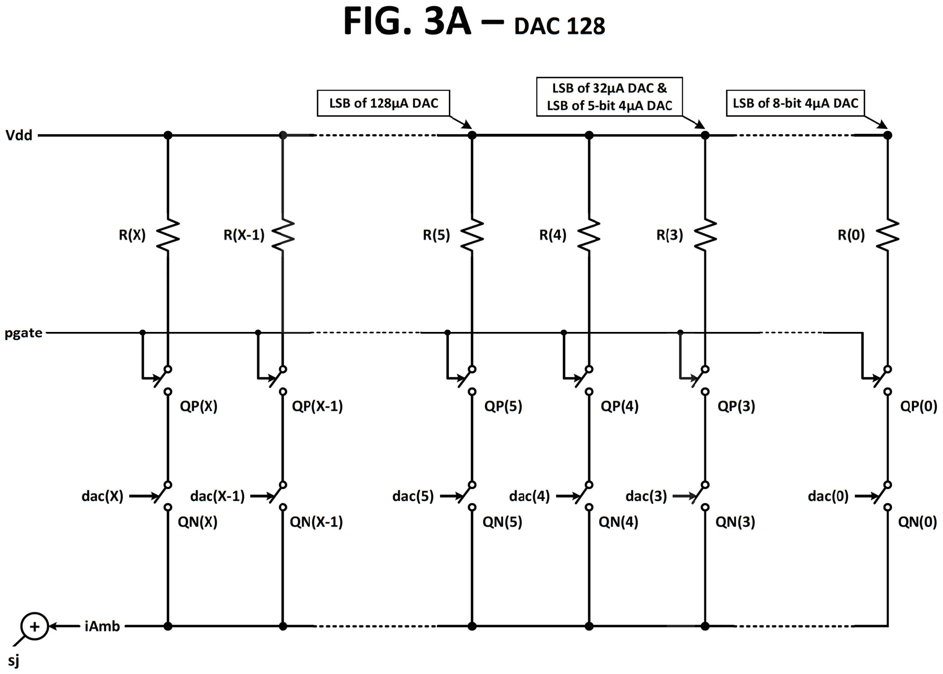

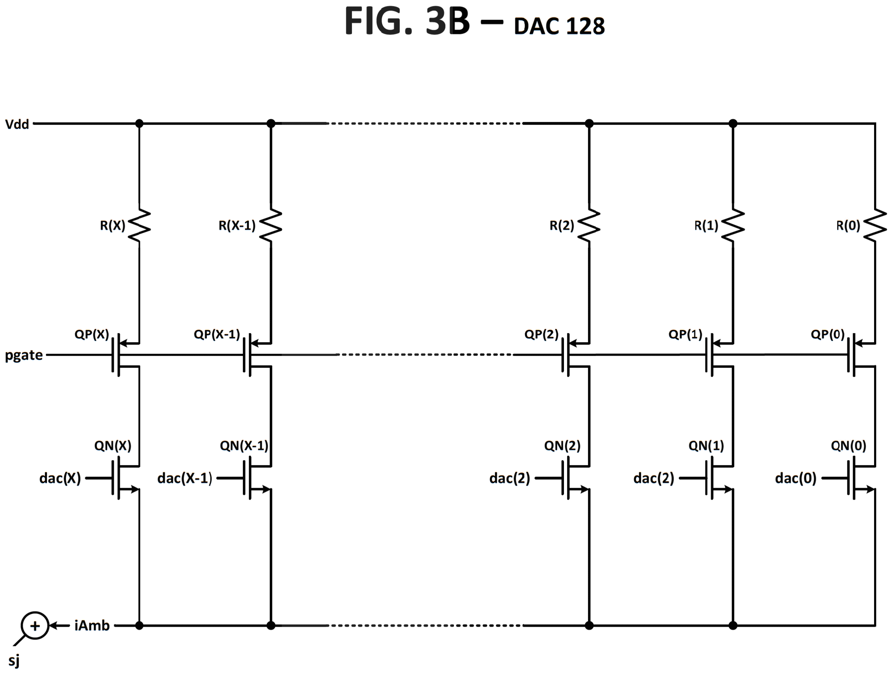

FIGS. 3A-3C illustrate implementations of the DAC 128. The DAC 128 may be implemented using a combination of resistors R(0)-R(X) along with switches QP(0)-QP(X) and switches QN(0)-QN(X). The pgate signal may happen to be a gate voltage applied to switches QP(0)-QP(X) within the DAC 128. The DAC 128 may receive the input code from controller 125 and process the input code to produce a cancellation current (iAmb). The input code may be in the form of the binary bits the DAC 128(0)-(X), where "X" is an integer number. This configuration may allow for precise conversion of the binary bits the DAC 128(0)-(X) into the cancellation current (iAmb).

The resistors R(0)-R(X) in the DAC 128 may form a resistor ladder network, providing discrete voltage levels corresponding to different digital input codes presented by the binary bits the DAC 128(0)-(X). The switches QP(0)-QP(X) and switches QN(0)-QN(X) may selectively connect the discrete voltage levels to a summing junction (sj). Implementing the switches QP(0)-QP(X) and switches QN(0)-QN(X) may also contribute to low power consumption of the mixed-signal unit 120 and an improved linearity in the conversion process.

The ability to generate small current increments may be crucial for maintaining high sensitivity and dynamic range in the mixed-signal unit 120, particularly when dealing with low-level photocurrents iPh<i> or subtle variations in ambient light conditions. The DAC 128, with different full-scale ranges and resolutions, may provide flexibility in handling various ambient light conditions and signal intensities, potentially improving the overall performance of the mixed-signal unit 120. This arrangement may enable the DAC 128 to generate a wide range of analog values for the cancellation current (iAmb) with high resolution and accuracy.

The mixed-signal unit 120 may maintain high sensitivity across various ambient light conditions while efficiently utilizing the available dynamic range of both the TIA amplifier (T1) and the DAC 128.

The mixed-signal unit 120 may dynamically adjust a least significant bit (LSB) value based on detected ambient light levels. For instance, the DAC 128 may employ the predetermined LSB value to achieve the desired precision for ambient current cancellation. By utilizing a predetermined LSB value based on system requirements, the DAC 128 may optimize the balance between precision and range as lighting conditions change, ensuring accurate ambient light cancellation and improving overall performance of the mixed-signal unit 120. The precision requirement may directly influence the design and configuration of the DAC 128 within the mixed-signal unit 120. The precision for ambient current cancellation may be defined by the LSB value of the DAC 128, which may represent the smallest current increment that can be generated. By carefully selecting and potentially adapting the LSB value, the mixed-signal unit 120 may maintain high sensitivity across various ambient light conditions while efficiently utilizing the available dynamic range of both the TIA amplifier (T1) and the DAC 128. By optimizing the balance between precision and range as lighting conditions change, the mixed-signal unit 120 may specify the precision needed for canceling the ambient current.

The choice of the LSB value may represent the smallest current increment that the DAC 128 can generate, directly impacting the resolution and accuracy of the ambient light cancellation process. This choice may involve a trade-off between precision and dynamic range, as a smaller LSB may allow for finer control but may limit the maximum current that the DAC 128 can generate. For example, when the mixed-signal unit 120 requires cancellation of ambient currents with 0.1 µA precision, the LSB of the DAC 128 may be set to 0.1 µA or smaller.

As an example, the LSB of a 128µA the DAC 128 may refer to the smallest current increment that the DAC 128 can produce in some instances. In this context, the DAC 128 may generate the cancellation current (iAmb) up to 128µA, with the LSB representing the finest resolution of current control. The value of the LSB may be determined by dividing the full-scale current (128µA) by 2n, where n is the number of bits in the DAC 128. For example, in an 8-bit the DAC 128, the LSB would be 128µA / 28 = 0.5µA. This fine granularity in current control may allow the mixed-signal unit 120 to precisely cancel ambient light currents, enabling accurate measurement of the desired intended light signal (iSig) by the TIA amplifier (T1). The ability to generate small current increments for the generate a cancellation current (iAmb) may be crucial for maintaining high sensitivity and dynamic range in the mixed-signal unit 120, particularly when dealing with low-level photocurrent iPh<i> or subtle variations in ambient light conditions.

In other examples, an LSB of a 32µA the DAC 128 may refer to the smallest current increment for the cancellation current (iAmb) that the DAC 128 can produce. In this context, the DAC 128 may be designed to generate the cancellation current (iAmb) up to 32µA, with the LSB representing the finest resolution of current control. The value of the LSB may be determined by dividing the cancellation current (iAmb) (32µA) by 2n, where n is the number of bits in the DAC 128. For example, in an 8-bit the DAC 128, the LSB would be 32µA / 28 = 0.125µA.

Similarly, the LSB of a 5-bit 4µA the DAC 128 may represent the smallest current step for the cancellation current (iAmb) that the DAC 128 may generate. With 5 bits, there are 25 = 32 possible levels.

The LSB for this the DAC 128 may be calculated as 4µA / 32 = 0.125µA. This fine granularity in current control may allow the mixed-signal unit 120 to precisely cancel ambient light currents, enabling accurate measurement of the desired intended light signal (iSig) by the TIA amplifier (T1).

The LSB of an 8-bit 4µA the DAC 128 may refer to the smallest current increment of the cancellation current (iAmb) that the DAC 128 configuration can produce. With 8 bits, there are possible levels. The LSB for this the DAC 128 may be calculated as or approximately 15.6 nA. This fine granularity in current control may allow the mixed-signal unit 120 to precisely cancel ambient light currents, enabling accurate measurement of the desired intended light signal (iSig) by the TIA amplifier (T1). The ability to generate such small current increments for the cancellation current (iAmb) may be crucial for maintaining high sensitivity and dynamic range in the mixed-signal unit 120, particularly when dealing with low-level photocurrent iPh<i> or subtle variations in ambient light conditions.

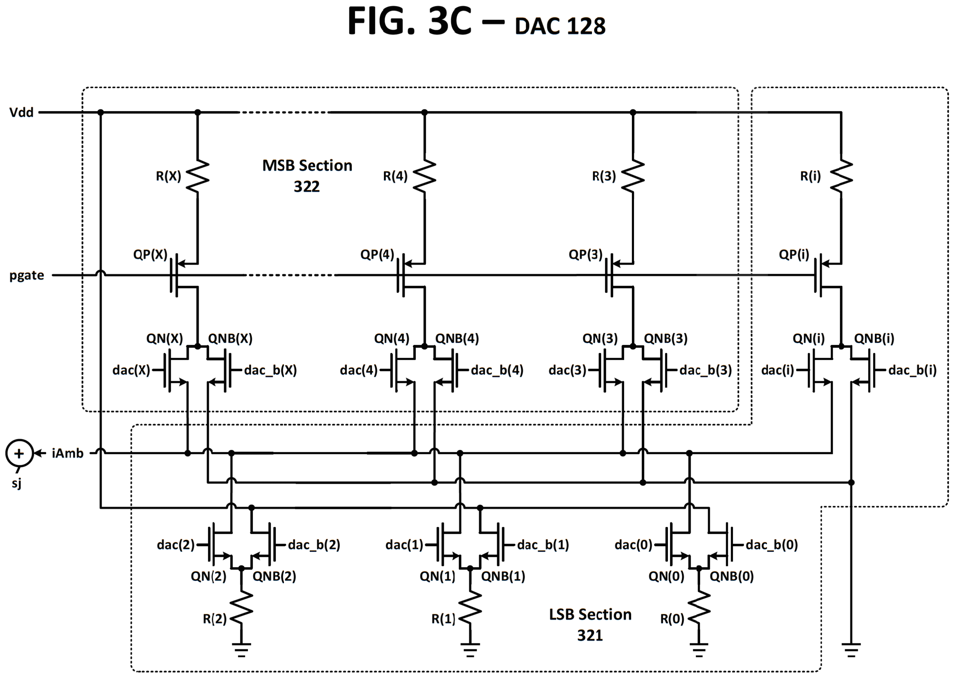

FIG. 3C illustrates an example the DAC 128 having switches QN(0)-QN(X) in the form of differential switches QN(0)-QN(X), QNB(0)-QNB(X). The DAC 128 in FIG. 3C may receive binary bits the DAC 128(0)-(X) from the controller 125 in the form of complementary bits. By way of example, binary bit the DAC 128(X) may be one of the binary bits the DAC 128(0)-(X). Similarly, the DAC 128_b(X) may be one of the binary bits the DAC 128_b(0)-(X). Binary bits the DAC 128(X), the DAC 128_b(X) are complementary bits (binary bit the DAC 128_b(X) = NOT binary bit the DAC 128(X)). Referred to herein, complementary bits are a pair of bits where one bit is the logical opposite of the other, ensuring that when one bit is logic high at the same time that the other is logic low. Binary bit the DAC 128(X) at logic high along with the DAC 128_b(X) being logic low is referred to herein as an "activating state." Binary bit the DAC 128(X) at logic low along with the DAC 128_b(X) being logic high is referred to herein as a "deactivating state." A complementary pair of binary bits the DAC 128(X), the DAC 128_b(X) is referred to as an "binary bit."

An LSB section 321 in FIG. 3C may include resistors R(i) and R(0)-R(1). The LSB section 321 may also include switches QN(i) and QN(0)-QN(2) along with switches QNB(i) and QNB(0)-QNB(2). The LSB section 321 may also include switches QN(i) and QN(0)-QN(2) along with switches QNB(i) and QNB(0)-QNB(2). The controller 125 may place complementary bits the DAC 128(i), the DAC 128_b(i) in an activating state to turn on the LSB section 321 in some instances. Likewise, the controller 125 may place complementary bits the DAC 128(i), the DAC 128_b(i) in a deactivating state to turn off the LSB section 321 in other instances.

An MSB section 322 in FIG. 3C may include resistors R(3)-R(X). The MSB section 322 may also include switches QN(3)-QN(X) along with switches QNB(3)-QNB(X).

The DAC 128 configuration of FIGS. 3A-3C may provide a balance between range and resolution, potentially optimizing the performance of the mixed-signal unit 120 across various lighting scenarios. The design of the DAC 128 may be optimized to minimize noise and ensure compatibility with the other components in the mixed-signal unit 120, such as the TIA amplifier (T1) and the ADC 124. By employing this architecture illustrated in the example of FIGS. 3A-3C, the DAC 128 may play a crucial role in converting digital control signals into precise analog currents for ambient light cancellation and other analog processing tasks within the mixed-signal unit 120.

Turning now to FIG. 4, timing for the different operating modes of the mixed-signal unit 120 is illustrated. The different operating modes may include a sleep mode, an initialization mode and a scanning mode.

The controller 125 may initiate the sleep mode to conserve energy during periods of low activity or when ambient light levels fall below a predetermined threshold. During the sleep mode, the controller 125 may periodically check for a wake-up condition. A "wake-up condition" may refer to a specific event or set of criteria that triggers the transition of the mixed-signal unit 120 from a sleep mode to an initialization mode. For example, a wake-up condition may be a sudden increase in ambient light intensity, a user interaction with the device, or a scheduled time interval elapsing.

A "trigger threshold" may refer to a predefined level or value associated with the wake-up condition that, when met or exceeded, may trigger the controller 125 to transition the mixed-signal unit 120 from a sleep mode to an initialization mode. This threshold may be a specific light intensity level. Alternatively, the threshold may be a percentage change in light intensity from a previous measurement. The trigger threshold serves as a decision point for the controller 125 to determine when to exit the sleep mode.

A wake-up condition may include, but is not limited to, a specific change in light intensity detected by the photodetector 110, an elapsed time duration, or any other interaction with the mixed-signal system 100. For instance, the photodetector 110 might detect an increase in light intensity. Alternatively, the wake-up condition may be triggered by a timer reaching a predetermined interval.

The mixed-signal unit 120 may incorporate programmable trigger thresholds to allow for adaptive power management across various operating scenarios and environmental conditions. This programmability may enable the mixed-signal unit 120 to be fine-tuned for different use cases. For example, in a wearable device, the trigger threshold might be set lower during daytime hours to increase responsiveness, and higher at night to conserve battery life. In an industrial setting, the thresholds may be adjusted based on the specific lighting conditions of the environment.

The controller 125 may transition the mixed-signal unit 120 from sleep mode to initialization mode upon detecting the wake-up condition. This transition may involve powering up components of the mixed-signal unit 120 such as the amplifier array 123 and the ADC 124 to prepare for active light sensing and ambient light cancellation operations. The initialization mode may include calibration procedures and initial ambient light measurements to establish a baseline for subsequent scanning operations.

During the initialization mode, the mixed-signal unit 120 may acquire ambient light. The ambient light level represents the intensity or magnitude of ambient light within the environment, as measured by the photodiodes 111 and quantified by the ADC 124. This level may be expressed as a digital value (output code) corresponding to the photocurrent iPh<i> generated by ambient light in each photodiode 111.

As used herein, the term "intended light signal" refers to the specific light emission that the mixed-signal unit 120 is designed to detect and measure, distinct from the ambient light. The intended light signal (iSig) may originate from a controlled light source, such as an LED, laser, or other emitter that is part of a sensing system. This intended signal is typically modulated, pulsed, or otherwise controlled to allow differentiation from ambient light sources. The intensity, wavelength, and temporal characteristics of the intended light signal (iSig) are typically known or controlled parameters in the system design, allowing for optimized detection and processing by the photodiodes 111 and associated circuitry.

As used herein, the term "light signal" refers to the photocurrent iPh<i> generated in a photodiode 111 specifically in response to the intended light signal (iSig). This intended light signal (iSig) is distinct from and typically smaller than the ambient current generated by ambient light. The intended light signal (iSig) is the primary quantity of interest in the mixed-signal unit 120, representing the useful information to be measured and processed by the mixed-signal unit 120. The ability to accurately detect and quantify the intended light signal (iSig), often in the presence of much larger ambient currents, is a key performance metric of the mixed-signal unit 120.

Ambient light cancellation refers to the process of mitigating or eliminating the influence of ambient light on photodiode 111 measurements within the mixed-signal unit 120. This ambient light cancellation process may involve measuring the ambient light level, generating a cancellation current (iAmb) using the DAC 128, and subtracting this cancellation current (iAmb) from the total photocurrent to isolate the desired intended light signal (iSig).

The photodetector 110 may detect photocurrents iPh<i>. The controller 125 may regulate flow of photocurrents iPh<i> from the photodetector 110 to the amplifier array 123. The controller 125 may generate an enable signal that selects a specific switch 122 in the matrix 122 and selects a corresponding amplifier circuit 123 in the amplifier array 123. The controller 125 may also generate a select signal to select photocurrents iPh<i> in a specific switch 122.

The matrix 122 may route photocurrents iPh<i> to the amplifier array 123. The control lines for the matrix 122 may be independent, allowing each matrix 122 to switch separately, or shared, allowing all switches 122 to switch together.

The amplifier array 123 may receive photocurrents iPh<i> from photodiodes 111 routed through switches 122. More than one photodiode 111 may connect to the TIA amplifier (T1) in the scanning mode.

To condition the photocurrents iPh<i>, the amplifier circuit 123 may receive a photocurrent iPh<i> and employ a cancellation technique to subtract an ambient current component from the photocurrent iPh<i>. For instance, the amplifier array 123 may process incoming photocurrents iPh<i> and remove unwanted ambient light components. The amplifier circuit 123 may achieve this subtraction by applying a precisely controlled cancellation current (iAmb), which the DAC 128 generates to match and offset the ambient current component in the photocurrent iPh<i>. The controller 125 may produce control signals that dynamically adjust the cancellation current (iAmb) to correspond to the varying levels of the ambient current component, ensuring accurate removal of the ambient current component across different environmental conditions. The amplifier circuit 123 effectively isolates the desired intended light signal (iSig) from the total photocurrent iPh<i> by subtracting an amount equal to the cancellation current (iAmb). This process allows the amplifier circuit 123 to output a conditioned signal that primarily represents the intended light signal (iSig), with minimal interference from ambient light.

The ADC 124 may convert conditioned photocurrents iPh<i> into quantized photocurrents adc<N:M>. The ADC 124 may measure the ambient light at the start of the frame for each photodiode 111. The quantized photocurrents adc<N:M> may be a series of bits that digitally represent the magnitude of the detected light intensity. For example, quantized photocurrent adc<0:0> may correspond to photodiode 111 <0> routed through multiplexer <0> and amplifier circuit <0>.

At the start of each frame, the ADC 124 may sample the analog voltage signal from the TIA amplifier (T1) and quantize the analog voltage signal into a digital representation. This process may map a continuous range of analog values to a finite set of discrete digital values. The quantization process may introduce a small amount of quantization error. Using a higher number of bits in the ADC 124 may minimize the quantization error. The ADC 124 may generate the DAC 128(0)-(k) for each photodiode 111.

The controller 125 may receive quantized photocurrents adc<N:M> in the form of an output code. The controller 125 may store the quantized photocurrents adc<N:M> into cache 125a in the form of binary bits the DAC 128(0)-(X).

Illustrated in FIG. 4 are scanning periods scan<0> to scan<T>, where "T" is an integer number. The controller 125 may generate a begin signal, a delay signal, and binary bits the DAC 128(0)-(X).

The controller 125 may sum the output codes for specific photodiodes 111. For example, if in scan<0> photodiode 111(0), photodiode 111(3) and photodiode 111(5) are connected to TIA amplifier (T1) of amplifier circuit 123(k) through switch (k), the controller 125 may sum adc<0:k>+adc<3:k>+adc<5:k> to produce binary bits the DAC 128(0)-(k).

The controller 125 may store the DAC 128(0)-(k) in on-chip registers for use during scan<y> times. The controller 125 may use the DAC 128(0)-(k) for each TIA amplifier (T1) in a specific scan<y>. To generate these signals, the controller 125 may process the binary code (adc).

The controller 125 may sum the output codes for photodiodes 111 used for each TIA amplifier (T1) in a specific scan<y>. For example, in scan<0>, if photodiode 111(0), photodiode 111(3) and photodiode 111(5) are connected to TIA amplifier (T1) of amplifier circuit 123(k) through switch (k), the controller 125 may produce binary bits the DAC 128(0)-(k) = adc<0:k>+adc<3:k>+adc<5:k>.

The cache 125a may function as a high-speed memory component. The cache 125a may comprise volatile or non-volatile memory. The cache 125a may temporarily store binary bits the DAC 128(0)-(X). The controller 125 may generate control signals including a begin signal, a delay signal, and binary bits the DAC 128(0)-(X). The cache 125a may store and rapidly retrieve data related to ambient light levels, photodetector outputs, and compensation values used in the ambient light cancellation process. The cache 125a may also store calibration data, measurement results, and operational parameters related to the ambient light cancellation process. Additionally, the cache 125a may store ambient light measurements, photodetector signals, and intermediate processing results to improve the speed and efficiency of the mixed-signal unit 120. The controller 125 may convert output code into binary bits the DAC 128(0)-(X) and store the binary bits the DAC 128(0)-(X) into the cache 125a.

The de-kick circuit 127 may power up during the initialization mode at the start of a scan cycle. This may prevent kickback on the bias signal node. The controller 125 may output a begin signal that at the commencement of the initialization mode and may output a delay signal at the beginning of each scan<y>.

The de-kick circuit 127 may process the begin signal to output a pgate signal having a fastbuf level in some instances, as illustrated in FIG. 4. The fastbuf level may induce the DAC 128 may undergo a pre-charging process to mitigate undesired voltage transients, or kickback. In other instances, the de-kick circuit 127 may process the delay signal to produce the pgate signal having a bias level after a predetermined duration.

During the scanning mode, the mixed-signal unit 120 may connect multiple photodiodes 111 to the TIA amplifier (T1). The number of connected photodiodes 111 may vary depending on the specific configuration and requirements of the mixed-signal unit 120. This flexibility may allow for adaptable sensing arrangements to suit different applications or environmental conditions.

Powering up/down the TIA amplifier (T1) may disturb the bias signal. In each scan<y>, the TIA amplifier (T1) may be powered up and then powered down at the end of the scan. To minimize kickback, pgate signal at the fastbuf level may pre-charge the DAC 128. The mixed-signal unit 120 may limit the kickback to the offset voltage of the de-kick circuit 127. Minimizing this offset voltage may be critical in the design process to ensure optimal performance of the mixed-signal unit 120. The pgate signal at the bias level may bias the DAC 128 with a low-noise, high-PSRR bias signal.

The ADC 124 may load preset values into control registers. This storage may allow the mixed-signal unit 120 to efficiently manage the quantized photocurrents adc<N:M> so as to enable real-time processing of the detected photocurrents iPh<i>. The de-kick circuit 127 may be used during scan<y> to control the dynamic errors introduced during TIA amplifier (T1) power up. The de-kick circuit 127 may powered up buffer B1 in the initialization mode to avoid kickback in the bias signal. At the start of a scan<y>, the gate of the DAC 128 (pgate signal) may be charged using the fastbuf signal.

After a delay, switch S22 of the de-kick circuit 127 may electrically connect the DAC bias circuit 126 to the DAC 128, as illustrated in FIG. 2. Electrically connecting the DAC bias circuit 126 to the DAC 128 may ensure that a TIA amplifier (T1) can power up and/or power down without causing disturbance to the bias signal. In the absence of a disturbance to the bias signal, the pgate signal may settle to an accurate bias signal level during each scan <y>.

During the initialization mode, the controller 125 may add the output code for each adc<n:m> of the photocurrents iPh<i> for storage in the form of the input code. During the scanning mode, the DAC 128 may receive the input code from controller 125 and process the input code to produce a cancellation current (iAmb). The cancellation current (iAmb) may establish a baseline current level for ambient light cancellation during a subsequent scanning operation. This baseline current level may allow the mixed-signal unit 120 to accurately differentiate between ambient light and desired signal light from the photodetector 110. For instance, the cancellation current (iAmb) from the DAC 128 at the summing junction (sj) of FIG. 1 may eliminate an amount of the cancellation current (iAmb) from a subsequent photocurrent iPh<i>.

The term "summing junction" refers to a circuit node where multiple electrical currents combine algebraically. The summing junction (sj) performs a critical role in the ambient light cancellation process. For instance, the summing junction (sj) specifically refers to a circuit node in the amplifier circuit 123 where a photocurrent iPh<i> from the photodiode 111 and the cancellation current (iAmb) from the DAC 128 may combine. The summing junction (sj) may include one or more wires or conductive traces. The summing junction (sj) allows the ambient light component of the photocurrent iPh<i> to be effectively canceled by the precisely controlled cancellation current (iAmb), leaving only the desired intended light signal (iSig) to be processed by the amplifier circuit 123, which may enable improved dynamic range and signal-to-noise ratio in the mixed-signal unit 120.

The term "cancellation current (iAmb)" refers to an electrical current generated by the DAC 128 based on control signals from the controller 125. The DAC 128 specifically produces the cancellation current (iAmb) to counteract the ambient light component of the photocurrent iPh<i> at the summing junction (sj). Control signals from the controller 125 may dynamically adjust the magnitude and timing of the cancellation current (iAmb) to match and offset the ambient light component in the photodiode 111. The cancellation current (iAmb) may allow the mixed-signal unit 120 to isolate and measure only the desired intended light signal (iSig). The elimination of the amount of the cancellation current (iAmb) from the subsequent photocurrent iPh<i> may result in the passage into the TIA amplifier (T1) of the intended light signal (iSig) absent the ambient light component.

The ability to remove the ambient current component (iAmb) from the photocurrent iPh<i> enhances the overall sensitivity and dynamic range of the mixed-signal unit 120. The ambient light cancellation enables the mixed-signal system 100 to detect and measure small signal currents (iSig) even in the presence of strong ambient light, improving the signal-to-noise ratio and allowing for more accurate light sensing across a wide range of lighting conditions.

When an element is referred to herein as being "connected" or "coupled" to another element, it is to be understood that the elements can be directly connected to the other element, or have intervening elements present between the elements.

Certain operations of methods described in this technology, or systems executing those methods, may be schematically represented in figures or textual descriptions. Unless explicitly stated, the spatial arrangement of operations in figures does not necessarily dictate the sequence in which they must be performed. Operations may be executed in a different order than illustrated, depending on implementation requirements. Additionally, certain operations may be performed in parallel or partially in parallel, utilizing dedicated parallel processing devices or separate computing systems that interoperate within a larger system.

The term "or," unless otherwise defined or limited, denotes a non-exclusive list, allowing various combinations of listed elements rather than restricting them to mutually exclusive alternatives. For example, a list including "A, B, or C" may encompass A alone, B alone, C alone, any combination of two elements, or all three elements together. Exclusivity applies only when expressly stated using terms such as "either," "only one of," or "exactly one of." Similarly, lists preceded by phrases such as "one or more of" or "at least one of" indicate the possibility of multiple occurrences of any or all listed elements. A list introduced by "a plurality of" or "two or more of" suggests multiple instances of any or all elements. The term "or" should only be interpreted as exclusive when explicitly specified by contextual qualifiers.

The articles "a," "an," and "the" generally encompass both singular and plural forms unless explicitly stated otherwise. The terms "comprises," "includes," and "has" indicate the presence of stated features, components, operations, or elements while not excluding additional features, components, or combinations thereof.

Throughout this document, ordinal numbers such as "first," "second," and "third" may be used to describe various elements. These terms serve solely to distinguish elements from one another rather than imply a specific sequence, hierarchy, or limitation on quantity. Ordinal numbers do not necessarily dictate an order unless explicitly modified by terms such as "before," "after," or "single." A first element is distinct from a second element, and the first element may contain multiple components or appear before or after the second element in a given arrangement. The designation of ordinal numbers may be interchangeable without altering the scope of the described examples.

Any trademarks referenced herein may be common law or registered trademarks of third parties affiliated or unaffiliated with the applicant or assignee. These references are provided for illustrative purposes only and should not be interpreted as limiting the disclosed embodiments to material associated exclusively with those trademarks.

The following are further embodiments of the invention:
1. An apparatus, comprising:
   a digital-to-analog converter configured to convert, to produce a cancellation current, an input code into the cancellation current; and
   an amplifier circuit configured to:
      receive a photocurrent comprising an intended light signal and an ambient current component, and
      convert, in response to removing the ambient current component from the photocurrent by an amount equal to the cancellation current, the photocurrent into a signal voltage that is proportional to the intended light signal.
2. The apparatus of embodiment 1, wherein the amplifier circuit comprises:
   a transimpedance amplifier configured to convert the photocurrent into the signal voltage.
3. The apparatus of embodiment 1, wherein the magnitude of the cancellation current is linearly proportional to the input code.
4. The apparatus of embodiment 1, further comprising:
   an analog-to-digital converter configured to convert, in response to receiving the signal voltage from the amplifier circuit, the signal voltage into an output code.
5. The apparatus of embodiment 4, wherein the output code is linearly proportional to the magnitude of the signal voltage.
6. The apparatus of embodiment 4, further comprising:
   a controller configured to convert the output code into the input code.
7. The apparatus of embodiment 1, further comprising:
   a matrix configured to route the photocurrent from a photodiode to the amplifier circuit.
8. The apparatus of embodiment 7, wherein the matrix comprises a plurality of switches configured to selectively route, to the amplifier circuit, a plurality of photocurrents from a photodetector.
9. The apparatus of embodiment 8, wherein the photodetector comprises the photodiode.
10. The apparatus of embodiment 8, wherein one of the photocurrents from the photodetector is the photocurrent.
11. The apparatus of embodiment 1, further comprising:
   a de-kick circuit configured to output, to the digital-to-analog converter, a signal that transitions between a first level and a second level.
12. A system, comprising:
   a plurality of photodiodes in a photodetector, a photodiode being one of the photodiodes;
   a digital-to-analog converter configured to convert, to produce a cancellation current, an input code into the cancellation current; and
   an amplifier circuit configured to:
      receive, from the photodiode, a photocurrent comprising an intended light signal and an ambient current component, and
      convert, in response to removing the ambient current component from the photocurrent by an amount equal to the cancellation current, the photocurrent into a signal voltage that is proportional to the intended light signal.
13. The system of embodiment 12, wherein the amplifier circuit comprises:
   a transimpedance amplifier configured to convert the photocurrent into the signal voltage.
14. The system of embodiment 12, wherein the magnitude of the cancellation current is linearly proportional to the input code.
15. The system of embodiment 12, further comprising:
   an analog-to-digital converter configured to convert, in response to receiving the signal voltage from the amplifier circuit, the signal voltage into an output code.
16. The system of embodiment 15, wherein the output code is linearly proportional to the magnitude of the signal voltage.
17. The system of embodiment 15, further comprising:
   a controller configured to convert the output code into the input code.
18. The system of embodiment 12, further comprising:
   a matrix configured to route the photocurrent from a photodiode to the amplifier circuit.
19. The system of embodiment 12, further comprising:
   a de-kick circuit configured to output, to the digital-to-analog converter, a signal that transitions between a first level and a second level.
20. A method, comprising:
   converting, by a digital-to-analog converter, to produce a cancellation current, an input code into the cancellation current; and
   receiving, by an amplifier circuit, a photocurrent comprising an intended light signal and an ambient current component; and
   converting, by the amplifier circuit in response to removing the ambient current component from the photocurrent by an amount equal to the cancellation current, the photocurrent into a signal voltage that is proportional to the intended light signal.

## Claims

1. An apparatus, comprising:
a digital-to-analog converter configured to convert, to produce a cancellation current, an input code into the cancellation current; and
an amplifier circuit configured to:
receive a photocurrent comprising an intended light signal and an ambient current component, and
convert, in response to removing the ambient current component from the photocurrent by an amount equal to the cancellation current, the photocurrent into a signal voltage that is proportional to the intended light signal.

2. The apparatus of claim 1, wherein the amplifier circuit comprises:
a transimpedance amplifier configured to convert the photocurrent into the signal voltage.

3. The apparatus of claim 1 or 2, wherein the magnitude of the cancellation current is linearly proportional to the input code.

4. The apparatus of one of the preceding claims, further comprising:
an analog-to-digital converter configured to convert, in response to receiving the signal voltage from the amplifier circuit, the signal voltage into an output code,
in particular, wherein the output code is linearly proportional to the magnitude of the signal voltage.

5. The apparatus of claim 4, further comprising:
a controller configured to convert the output code into the input code.

6. The apparatus of one of the preceding claims, further comprising:
a matrix configured to route the photocurrent from a photodiode to the amplifier circuit,
and/or
a de-kick circuit configured to output, to the digital-to-analog converter, a signal that transitions between a first level and a second level.

7. The apparatus of claim 6, wherein the matrix comprises a plurality of switches configured to selectively route, to the amplifier circuit, a plurality of photocurrents from a photodetector,
in particular, wherein the photodetector comprises the photodiode.

8. The apparatus of claim 7, wherein one of the photocurrents from the photodetector is the photocurrent.

9. A system, comprising:
a plurality of photodiodes in a photodetector, a photodiode being one of the photodiodes;
a digital-to-analog converter configured to convert, to produce a cancellation current, an input code into the cancellation current; and
an amplifier circuit configured to:
receive, from the photodiode, a photocurrent comprising an intended light signal and an ambient current component, and
convert, in response to removing the ambient current component from the photocurrent by an amount equal to the cancellation current, the photocurrent into a signal voltage that is proportional to the intended light signal.

10. The system of claim 9, wherein the amplifier circuit comprises:
a transimpedance amplifier configured to convert the photocurrent into the signal voltage.

11. The system of claim 9 or 10, wherein the magnitude of the cancellation current is linearly proportional to the input code.

12. The system of one of the claims 9 - 11, further comprising:
an analog-to-digital converter configured to convert, in response to receiving the signal voltage from the amplifier circuit, the signal voltage into an output code,
in particular, wherein the output code is linearly proportional to the magnitude of the signal voltage.

13. The system of one of the claims 9 - 12, further comprising:
a controller configured to convert the output code into the input code.

14. The system of one of the claims 9 - 13, further comprising:
a matrix configured to route the photocurrent from a photodiode to the amplifier circuit.
and/or
a de-kick circuit configured to output, to the digital-to-analog converter, a signal that transitions between a first level and a second level.

15. A method, comprising:
converting, by a digital-to-analog converter, to produce a cancellation current, an input code into the cancellation current; and
receiving, by an amplifier circuit, a photocurrent comprising an intended light signal and an ambient current component; and
converting, by the amplifier circuit in response to removing the ambient current component from the photocurrent by an amount equal to the cancellation current, the photocurrent into a signal voltage that is proportional to the intended light signal.
